# EUROPEAN PATENT SPECIFICATION

(11) **EP 2 113 164 B1**
(45) Date of publication and mention of the grant of the patent: **06.07.2011**
(21) Application number: 09158804.6
(22) Date of filing: 27.04.2009
(51) Int. Cl.: A01D 78/10

(54) **Rotary rake**
Kreiselschwader
Râteau rotatif

(30) Priority: 30.04.2008 DK 200800610
(43) Date of publication of application: 04.11.2009
(73) Proprietor: JF-Fabriken - J. Freudendahl A/S, 6400 Sønderborg (DK)
(72) Inventor: Springer, Klaus, 38268 Lengede (DE)
(74) Representative: Joergensen, Bjoern Barker

(56) References cited:
- EP-A1- 1 108 352
- DE-A1- 19 837 955
- DE-A1-102006 042 552
- US-A1- 2006 059 881

## Description

The present invention relates to a rotary rake comprising an elongated running frame designed at one end to be connected to a tractor, at least one arm being fastened to the running frame through a pivot joint so as to be pivotal about a pivot axis so that the arm is able to swing between a lowered working position and a raised transport position, the arm being connected to a rotor with a chassis, the arm comprising a number of arm members which are pivotally interconnected through intermediate pivot joints the pivot axes of which are substantially vertical in the working position so that the rotor is movable between an outermost position in which the arm presents a longest effective arm length and an innermost position in which the arm presents a shortest effective arm length.

Rotary rakes are built with a large working width to be able to gather material in a wide path for subsequent picking up of the material by means of a tool with a limited working width. In the transport position, the rotary rake must have a limited width. It is therefore a prerequisite for building very wide rotary rakes that there is a correspondingly large possibility of variation in the width of the apparatus, which is obtained by the said arm.

A rotary rake of the type mentioned above is known from, e.g., DE 198 37 955 A1 or EP 1 108 352 A1, describing a rotary rake with such arm able to swing between a working position and a transport position. The arm is sectioned, and the outermost part of the arm carrying the rotor can swing forwards relative to the innermost part of the arm about a pivot axis which is vertical in the working position.

To ensure that the outermost part of the arm carrying the rotor can swing unimpededly forwards without any risk of the arm or the rotor colliding with, e.g., the towing vehicle, the portion of the running frame located between the towing vehicle and the relevant arm has to be relatively long. This is a problem as a long running frame in itself renders difficult general manoeuvring of the rotary rake. Moreover, a long running frame makes it more difficult to observe the statutory requirements as to the size of vehicles using public roads.

Another example of a rotary rake of the type mentioned in the introduction has been published in the European patent application EP 1 364 573 A2, which describes a rotary rake arm also sectioned, but where the outermost part of the arm carrying the rotor can swing rearwards relative to the innermost part of the arm about a pivot axis which is vertical in the working position.

Usually, several pairs of arms are arranged on the running frame, typically two pairs, at least the front pair of arms being able to swing as described above. To ensure that the outermost part of the arm carrying the rotor can swing unimpededly rearwards without any risk of the arm or rotor colliding with an arm located behind the relevant arm, the portion of the running frame located between the two arms has to be relatively long. This again gives rise to the problems mentioned above concerning the general manoeuvring of the rotary rake and observance of statutory requirements concerning the dimensions of the vehicle. Moreover, the long running frame also causes problems in the working situation with an increased risk of uncollected swath material, that is, areas with swath material which is not collected into a swath by the rotary rakes during curve driving. The reason is that, during curve driving, the relative location of the path followed by a front rotor becomes more and more displaced relative to the path followed by a rear rotor, the greater the distance is between the two pairs of arms. This displacement is a problem as the relative location of the paths followed by a front and a rear rotor is carefully adjusted relative to each other so that substantially all swath material within the reach of the rotary rake is caught along its path. In the following, the term 'uncollected swath material' will cover the phenomenon described above.

Yet another example of a rotary rake of the type mentioned in the introduction has been published in the German patent application DE 196 18 839 A1, which describes a rotary rake arm the rotor of which is connected with the arm so that the rotor is pivotal about two pivot axes at right angles to each other in the horizontal plane. The arrangement is adapted so that the rotor can to some degree move in accordance with the surface in the working position and can reduce the sideways projection of the tines in the transport position.

However, the rotary rake arm according to this publication has a relatively limited possibility of variation in the length.

Other kinds of rotor arms are known in prior art, such as telescopic arms as described in EP 0 872 170 A2.

With usual telescopic arms, only a relatively small ratio is generally obtained between the distance from the running frame to the centre of the rotor when the telescopic arm is fully retracted and the distance when the telescopic arm is in its fully extended position. This distance existing at any time between the running frame and the centre of the rotor will also be designated the effective arm length in the following. For telescopic arms, the ratio between the smallest and the largest possible effective arm length is typically in the range between 1:1.5 and 1:2. Such a modest ratio is a problem for the efficiency of the rotary rake as, consequently, the working width cannot become very large because the statutory requirements concerning the dimensions of the rotary rake in the transport condition must also be observed.

Other agricultural machines with arms sectioned into members which are pivotally movable relative to each other are known, such as the hay tedder described in the patent application EP 0 664 948 A1.

Against that background, it is an object of the present invention to provide a rotary rake which eliminates at least some of the disadvantages of prior art.

This and other objects are obtained by providing a rotary rake of the type mentioned in the introduction, the rotary rake being characterized in that the arm comprises at least two elongated arm members and at least three of the said intermediate pivot joints, a first elongated arm member being pivotal about a second pivot axis relative to the running frame, a second elongated arm member being pivotal relative to the first elongated arm member about a third pivot axis, and the chassis of the rotor being pivotal relative to the second elongated arm member about a fourth pivot axis.

At switching from the outermost position (working position) to the innermost position (transport position), this arrangement of arm members and pivot joints allows the first elongated arm member to be pivoted inwards close to the running frame, the second arm member to be pivoted inwards close to the first arm member, and the rotor to be brought inwards close to the second pivot axis. This makes it possible to obtain a very large ratio between the longest and the shortest effective arm length.

According to one embodiment of the rotary rake, the ratio between the shortest effective length of the arm and the longest effective length of the arm is at least 1:2.5.

Accordingly, the rotary rake according to the invention can present a very big largest working width while being able to be folded together very compactly when required, such as in a transport situation on a road where, as mentioned above, it is important that the rotary rake observes at least the statutory requirements.

The effective length of the arm can preferably be variably adjusted to any working width within the relatively large interval between the shortest and the longest effective arm length as needed. Consequently, this provides a flexible rotary rake which can work rapidly and efficiently with a large working width on large regular fields, and which can also, if desired, be used with a smaller working width on less regular fields.

As the individual rotors can be placed relatively far from the running frame due to the large potential effective arm length, a further advantage consists in the possibility of providing several consecutive arm pairs along the running frame. Rotary rakes with both two and four rotors arranged symmetrically pairwise about the running frame are well-known today. With the present rotary rake, it is possible to provide, e.g., rotary rakes with more, e.g., six rotors.

According to one embodiment of the rotary rake, the arm members comprise two elongated arm members adapted to pivot oppositely to each other at switching between the innermost and the outermost positions.

This feature makes it possible to provide a rectilinear movement of the rotor between different effective arm lengths as well as the large ratio between the shortest and the longest effective arm length resulting in the advantages described above. Due to the rectilinear movement of the rotor, the running frame can be made relatively short because the rotor does not require space for swinging back or forth during the movement of the arm between the short and the long effective arm length. This is advantageous with regard to easier general manoeuvring of the rotary rake and also makes it easier to observe statutory requirements concerning the maximum size of vehicles on public roads. In addition, the provision of a short running frame reduces the problem mentioned above with uncollected swath material during curve driving.

With the invention it is also possible, and in some embodiments desirable, to move the rotors slightly in the longitudinal direction of the running frame or in the direction of driving during the switch from long to short effective arm length.

In a preferred embodiment, the elongated arm members are interconnected by means of a hinge.

This solution facilitates a very simple and inexpensive structure which still allows for a very compact folded condition of the rotary rake.

In a preferred embodiment of the rotary rake, the arm is distinguished in that the pivot axis or axes of the pivot joint or joints interconnecting the elongated arm members move(s) rearwards relative to the direction of driving at movement of the rotor from a position in which the arm exhibits a long effective arm length to a position in which the arm exhibits a short effective arm length.

When the rotor is pulled inwards, this will cause a shift in the weight distribution so that the hitching device of the towing vehicle is under a slightly lower load, and the driving wheels of the rotary rake are under a slightly higher load. A displacement of the weight distribution in that direction may be of benefit to the steering properties and directional stability of the towing vehicle.

The alternative may thus be that the pivot axis or axes of the pivot joint or joints interconnecting the elongated arm members move(s) forwards relative to the direction of driving at movement of the rotor from a position in which the arm exhibits a long effective arm length to a position in which the arm exhibits a short effective arm length.

At least one actuator may be provided for pivoting the innermost elongated arm member relative to the running frame, and at least one actuator may be provided for pivoting the outermost elongated arm member relative to the innermost elongated arm member.

Several actuators known to a worker skilled in the art will be suitable for this task, e.g., electrically driven actuators such as electric motors, or different kinds of mechanical means.

In a preferred embodiment, hydraulic actuators are used. Thereby, a rectilinear movement of the rotor can be obtained in a particularly simple way, viz. by having double-acting actuators in fluid communication with each other in a so-called master/slave connection. This means that the cylinder volumes of the two hydraulic actuators are mutually balanced so that the oil displaced from one hydraulic cylinder as its piston rod is pushed into the cylinder pushes the piston rod of the other hydraulic actuator out of its cylinder at the same rate. With the said arrangement of the actuators relative to the arm members, it is thus possible in an easy manner to provide a rectilinear pattern of movement of the rotor.

In one embodiment of the rotary rake, a resilient member has been inserted in the connection between at least one of the actuators and the arm member with which the actuator is connected.

Such resilient member is suitable for absorbing shocks which may affect the rotor during driving in a working situation.

One or more such resilient members may be inserted in various places. Where a resilient member is provided between the outermost elongated arm member and the actuator connected with it, the rotor is allowed to deflect from the force of impact about the pivot joint between the two elongated arm members as the axis of this pivot joint is substantially vertical in the working position.

If a resilient member is provided between the innermost elongated member and the actuator connected with it, the rotor is allowed to deflect from the force of impact about the pivot joint between the innermost elongated arm member and the running frame.

Naturally, a combination of the above solutions, that is, simultaneous provision of resilient members at the various places is an option.

In one embodiment, the resilient member may be constituted by an integral, possibly projecting, part of one of the elongated arm members. Alternatively, the resilient member is a separate member, such as a kind of strut fastened onto the elongated arm member. This will be an inexpensive and simple solution, which is easy to maintain.

In one embodiment, the resilient member may be constituted by a piston rod of one of the hydraulic actuators mentioned above. The advantage of this is that no further members need be provided other than the hydraulic actuators already provided. This helps keep the structure simple.

One embodiment of a rotary rake is characterized in that the running frame is provided with driving wheels, and that at least two rotors are provided on respective sides of the running frame in front of the driving wheels relative to the direction of driving, the rotors being adapted to place a swath outside the track width of the driving wheels, and that a single rotor is provided behind the driving wheels relative to the direction of driving, the rotor being adapted to collect swath material.

Compared with a conventionally built rotary rake with sets of rotors arranged pairwise symmetrically about the running frame, the rotary rake according to this embodiment allows a whole rotor, including rotor frame, supporting wheels, rotor drive, associated arm members, connecting joints, etc., to be omitted, in a manner of speaking. A rotary rake according to this embodiment is thus less expensive both in terms of construction and maintenance and even faster and more manageable to maintain. By choosing rotors with a large diameter it is still possible to obtain a rotary rake with quite a large working width.

According to one embodiment of the rotary rake, the arm associated with the rear rotor is pivotal relative to the running frame about a substantially vertical pivot axis.

This makes it possible to adjust the position of the rear arm relative to the front arms.

Moreover, means may be provided for controlling the movement of the rear arm relative to the running frame so that the rear rotor is displaced substantially in the same direction as the turn during curve driving.

This functionality is especially advantageous in connection with the efforts against uncollected swath material during curve driving. The driving wheels of the rotary rake naturally constitute a centre of rotation for the rotary rake during swinging, to the extent any rotation occurs. If the rear arm, which is placed behind the driving wheels as opposed to the front arms, was immovable relative to the running frame, the relative positioning of the path followed by one of the front rotors would be displaced quite substantially during curve driving relative to the path followed by the rear rotor. As an example, when turning left, the rear rotor would be located too far to the right and, when turning right, too far to the left in relation to being able to reach the swath material which has passed between the reach of the front rotors and is to be collected by the said rear rotor.

This unfortunate situation is countered by the movable rear arm according to the invention as the rear rotor can then be displaced a suitable distance to the right in a right curve and a suitable distance to the left in a left curve.

Furthermore, during curve driving, a non-displaceable rear rotor would result in a final swath of varying width, which would be a problem in view of the subsequent tools or vehicles which are to pick up the swath. It is therefore most advantageous to have a movable rear arm capable of displacing the associated rear rotor in the same direction as the turn as this makes it possible to ensure a uniformly wide final swath.

Of course, it is even more advantageous that the movement of the rear arm can be controlled so that the movement matches the sharpness of the turn. The degree of movement of the rear arm must be adjusted to the detailed dimensions and mutual proportions of the structure.

A number of means well-known to the worker skilled in the art are available for the provision of such movement of the rear arm in accordance with the direction of the turn.

One example of a simple solution comprises mechanical means, such as a rod or a system of rods that can translate a change in the direction of driving of the towing vehicle into a change in the orientation of the rear arm. This mechanical solution is a very inexpensive and simple way of providing a movement and control thereof in accordance with the sharpness of the turn.

Other solutions might comprise, e.g., hydraulic or pneumatic means, such as, e.g., hydraulic or pneumatic cylinder aggregates, or alternatively electronic and/or digital means, such as a detector, a microchip and one or more suitable electric motors.

Examples of embodiments of the invention will now be described in more detail, some with reference to the accompanying drawing, in which:
Fig. 1 shows a schematic top view of part of the rotary rake according to one embodiment, the arm presenting a longest effective arm length;
Fig. 2 shows a schematic top view of part of the rotary rake according to the embodiment of Fig. 1, the arm now presenting a shortest effective arm length; and
Fig. 3 shows a schematic top view of a rotary rake according to an embodiment with an uneven number of rotors.

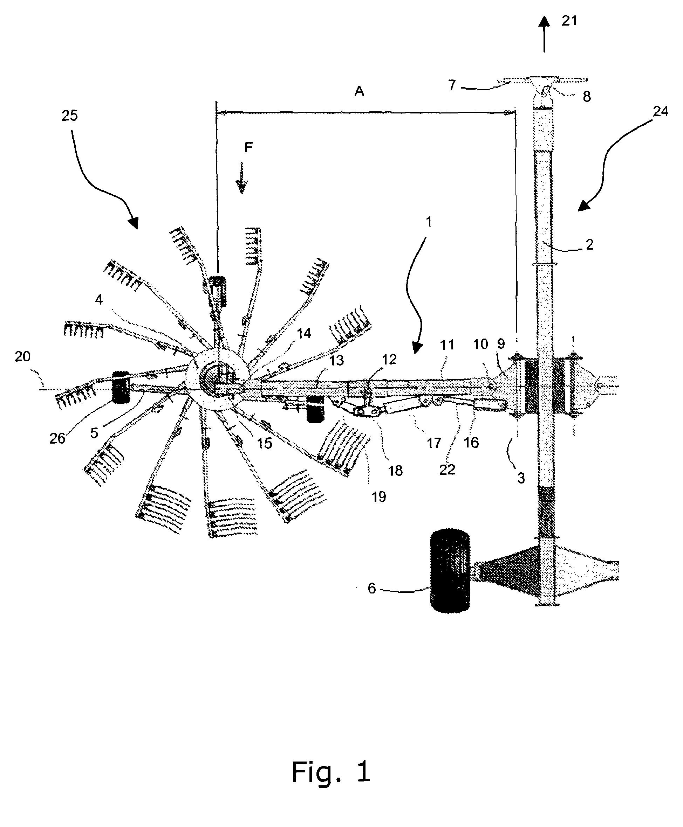

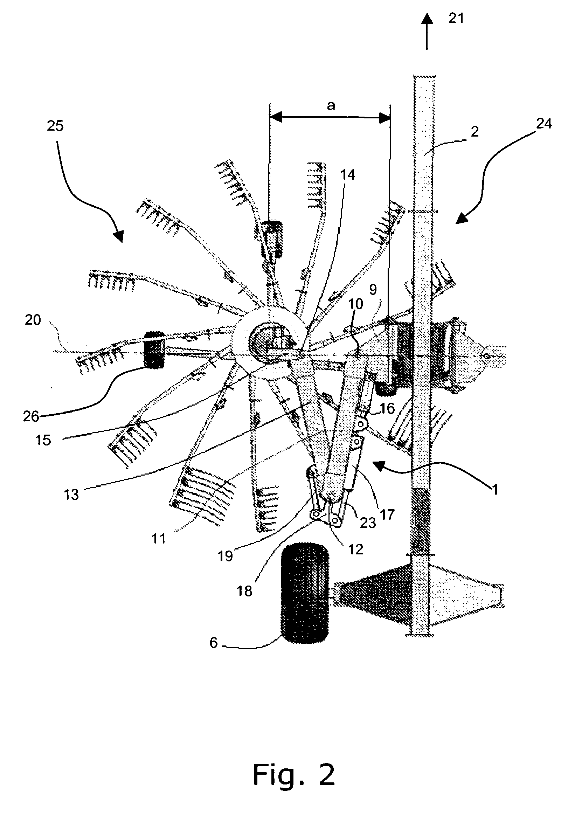

Figs. 1 and 2 show schematic top views of the left part, as seen in the direction of driving 21, of a rotary rake 24 according to an embodiment of the invention. The following description of this embodiment is based on this left part shown. As indicated, the rotary rake 24 shown in Figs. 1 and 2 is symmetrical about a longitudinal axis through a running frame 2. It should be understood that the following considerations also apply to the right part of the rotary rake.

In the embodiment shown, the rotary rake 24 is provided with a set of driving wheels 6. The rotary rake 24 is also provided with a set of arms 1 arranged pairwise in front of the driving wheels 6 relative to the direction of driving 21. Alternatively, the set of arms 1 could be arranged behind the driving wheels 6 relative to the direction of driving 21. Likewise, the rotary rake 24 could be provided with several sets of arms (not-shown) arranged pairwise on the running frame 2 in front of, behind or both relative to the driving wheels 6 and the direction of driving 21.

As is best seen in Fig. 1, the running frame 2 comprises a hitching device 7 at one end and the said set of driving wheels 6 at its other end.

The hitching device 7 is suitable for hitching to a towing vehicle, such as a tractor or the like (not shown). The hitching device 7 is pivotal relative to the rest of the running frame 2 through a pivot joint with a vertical pivot axis 8. The hitching may be effected in a well-known manner, e.g., in the three-point suspension of a tractor.

Between the hitching device 7 and the driving wheels 6, one end of an arm 1 is connected with the running frame 2 through a pivot joint with a pivot axis 3. The other end of the arm 1 is connected with a rotor 25. In Fig. 1, the arm 1 is shown in its working position, that is, with the arm 1 extending substantially horizontally.

The actual rotor 25 comprises a rotor drive 4 and a rotor chassis 5 with rotor supporting wheels 26 which provide support against the surface and run in the direction of driving 21 just like the driving wheels 6.

The arm 1 is also shown as extending substantially at right angles to the running frame 2. The pivot axis 3 is substantially parallel with the running frame 2 and permits the arm 1 and the rotor 25 to be swung upwards into a transport position, not shown, that is, with the arm 1 extending substantially vertically. The movement of the arm 1 between the working position and the transport position can be realised in a number of ways well-known to the worker skilled in the art, e.g., preferably hydraulically.

As shown in Figs. 1 and 2, the arm 1 comprises two elongated arm members 11 and 13, which are an innermost and an outermost arm member, respectively. The two arm members are interconnected by means of a hinge connection with a substantially vertical pivot axis 12. Other forms of connecting arrangements between the two elongated arm members 11 and 13 are also feasible.

The elongated arm member 11 is connected to the running frame 2 through a connecting member 9. In its turn, the connecting member 9 is pivotal relative to the running frame in a vertical plane about the said horizontal pivot axis 3, and in its turn the arm member 11 is pivotal in a horizontal plane about a vertical pivot axis 10 relative to the connecting member 9. It should be understood that the connecting member 9 may thus be a regular member with an actual extent as shown in Fig. 1, but in principle it may also be reduced to merely a universal joint.

At the outermost end of the arm 1, a connecting member 15 connects the elongated arm member 13 with the rotor 25. The connecting member 15 is pivotally connected with the arm member 13 about the vertical pivot axis 14.

In Fig. 1, the rotor 25 is shown in its outermost position in which the arm 1 presents its longest effective arm length A. The rotor 25 is movable between this outermost position and a second position (Fig. 2) in which the arm 1 presents a shortest effective arm length a. In its movement between the two positions, the rotor 25 follows a substantially straight line 20 transverse to the direction of driving 21.

As appears from Figs. 1 and 2, the joint pivot axis 12 of the two elongated arm members 11 and 13 moves rearwards relative to the direction of driving 21 when the rotor 25 is moved from a position in which the arm 1 presents a long effective arm length, e.g., A, into a position in which the arm 1 presents a shorter effective arm length, e.g., a. In other embodiments, this pivot axis 12 moves forwards relative to the direction of driving 21 in the same situation, but resulting in the same rectilinear movement of the rotor 25.

For carrying out this rectilinear movement of the rotor 25 along the line 20, two hydraulic cylinder aggregates 16 and 17 and two connecting members 18 and 19 are provided in the embodiment shown in Figs. 1 and 2.

The hydraulic cylinder aggregate 16, which has a piston rod 22, is connected at one end with the connecting member 9 and at its other end with the elongated arm member 11. The cylinder aggregate 16 can thus pivot the arm member 11 about the pivot axis 10 relative to the running frame 2.

The hydraulic cylinder aggregate 17, which has a piston rod 23, is in its turn connected at one end with the elongated arm member 11 and at the other end with the elongated arm member 13 through the connection members 18, 19. The cylinder aggregate 17 can thus pivot the arm member 13 about the pivot axis 12 relative to the arm member 11.

In Fig. 1, the connecting members 18 and 19 are shown as separate members. However, the members 18 and 19 are seen to constitute a rigid triangle together with the arm member 13, that is, the members 13, 18, 19 cannot move mutually as a consequence of the way in which the three members are interconnected. Accordingly, the connecting members 18 and 19 may alternatively be designed integrally with the arm member 13, e.g., as a projecting part thereof.

Together, the connecting members 18, 19 and the hydraulic cylinder aggregates 16, 17 ensure that the rectilinear movement of the rotor 25 along the line 20 is provided. This occurs partly by virtue of the fact that the two cylinder aggregates 16, 17 are double-acting and connected in a so-called master/slave connection, partly as a result of the way in which the connecting members 18 and 19 are designed relative to the remaining arm structure.

In the situation shown in Fig. 1, a large part of the piston rod 22 is pushed out of the cylinder aggregate 16. By virtue of the master/slave relationship between the cylinder aggregates 16 and 17, this means that a large part of the piston rod 23 is in its turn retracted into the cylinder aggregate 17 in the same position of the arm 1. As a consequence of this and other things, the arm 1 is fully extended and presents the longest effective arm length A.

When the rotor 25 is to be retracted to a position in which the arm 1 presents a shorter effective arm length, the piston rod 22 is retracted as far as necessary into the cylinder aggregate 16. Consequently, the piston rod 23 is pushed out of the cylinder aggregate 17 at the same rate. This means that the arm members 11 and 13 pivot oppositely to each other while their joint pivot axis 12 is moved rearwards relative to the direction of driving 21. In this way, the current effective arm length is reduced while the rotor 25, or rather the vertical pivot axis 14 connecting the arm 1 with the rotor 25, is pulled along the straight line 20 to a position closer to the running frame 2.

To ensure that the supporting wheels 26 of the rotor 25 always point in the direction of driving 21 even when the individual arm and connecting members 9, 11, 13, 15 pivot relative to each other during a change of the effective arm length, a system of parallelogram rods (not shown) is provided along the arm members 9, 11, 13, 15 to maintain the orientation of the chassis of the rotor.

As shown in Figs. 1 and 2, the two elongated arm members 11, 13 are interconnected by means of a hinge joint with the joint pivot axis 12. Alternatively, the arm members 11 and 13 could be interconnected by means of a form of inserted connecting member (not shown) of such dimensions that the two arm members 11, 13 would be able to lie fully parallel beside each other in the retracted state of the arm 1. In that embodiment, the connecting members 18, 19, the inserted connecting mechanism (not shown) and the hydraulic cylinder aggregates 16, 17 must be arranged suitably relative to each other so that the desired rectilinear movement 20 of the rotor 25 is still obtained.

In one embodiment, one connecting member 19 is designed as a resilient member. As mentioned above, this provides a shock-absorbing effect enabling the arm 1, e.g., at collision with or driving into an impediment or merely in rough or bumpy terrain, to deflect from the force of an impact F about the pivot joint 12 and then return to its original position.

In the embodiment shown in Figs. 1 and 2, in which the arm 1 is folded rearwards, in a manner of speaking, relative to the direction of driving 21, the connecting member 19 may be designed as a resilient strut acting like a compression spring.

It should be understood that if the arm folded forwards relative to the direction of driving, the connecting member 19, depending on the rest of the structure in this case, might have to be designed as a resilient member acting like a tension spring. However, the effect would be the same, viz. that the arm 1 is permitted to deflect a little from the force of the impact F about the pivot joint 12 and then return to its original position.

Additionally, or alternatively, the piston rod 22 of the cylinder aggregate 16 in the embodiment shown in Figs. 1 and 2 may be designed as a compression spring member. This will permit the arm 1 to deflect from the force of the impact F about the pivot joint 10. The same considerations as above apply here.

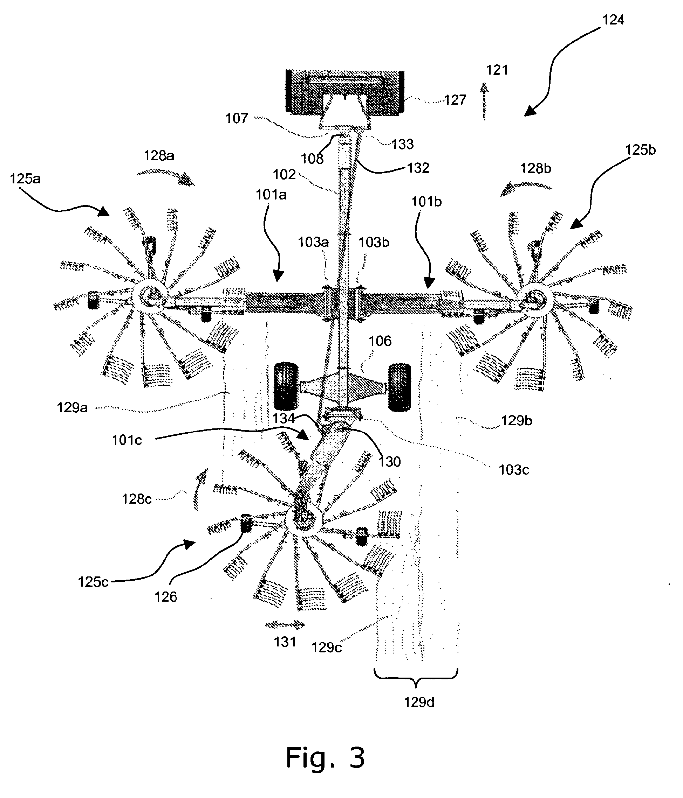

Fig. 3 schematically shows another embodiment of a rotary rake 124 according to the invention. As appears, this is an embodiment in which the rotary rake 124 is provided with an uneven number of rotors 125a, 125b, 125c.

The rotary rake 124 has a number of fundamental features in common with the embodiments mentioned previously, viz. a running frame 102 moving in a direction of driving 121 on driving wheels 106 towed after a towing vehicle 127, to which the rotary rake 124 is hitched by means of a suitable hitching device 107, which in its turn is pivotally connected with the running frame 102 by means of a pivot joint with the vertical pivot axis 108. Also in this case, the hitching can be effected in a well-known manner as mentioned previously for other embodiments.

The rotary rake 124 of Fig. 3 is shown with a set of arms 101a, 101b arranged pairwise opposite to each other about the running frame 102 in front of the driving wheels 106 relative to the direction of driving 121. At the end of each arm 101a, 101b, a rotor 125a, 125b, respectively, is arranged with directions of rotation 128a and 128b, respectively.

As for the embodiments previously mentioned, it should be understood that other arrangements are also feasible here, e.g., with the arms 101a, 101b located behind the driving wheels 106, or with more than two pairs of arms arranged in front of, behind or both relative to the driving wheels 106, although this is not shown.

Behind the driving wheels 106 relative to the direction of driving 121, a single rear arm 101c with associated rotor 125c is provided. The latter has a direction of rotation 128c.

In Fig. 3, the arms 101a, 101b, 101c are shown in their working position. In the same well-known way as described above, the arms 101a, 101b, 101c can be swung up into a substantially vertical transport position as they are connected with the running frame by means of pivot joints with the respective pivot axes 103a, 103b and 103c. As appears from Fig. 3, the pivot axes 103a and 103b of the two front arms 101a and 101b are parallel with the direction of driving 121 relative to the running frame 102, while the pivot axis 103c of the rear arm 101c is at right angles to the direction of driving 121 relative to the running frame 102.

In Fig. 3, all the arms 101a, 101b, 101c are shown as being telescopic arms. It should be understood that the rotary rake 124 could alternatively be equipped with folding arms as those shown in Figs. 1 and 2 and mentioned above, or even with a mixture of telescopic arms and folding arms.

To reduce the transport dimensions, the arms are retracted or folded together when the rotors 125a, 125b, 125c are to be brought into the transport condition.

To obtain a large working width, the diameter of the rotors 125a, 125b, 125c is, e.g., approx. 4 m.

As is well-known, conventional rotary rakes with an even number of rotors collect the swath material into a joint swath located centrally relative to the rotary rake. The mode of action of the rotary rake 124 according to the embodiment with an uneven number of rotors 125a, 125b, 125c is slightly different and will be described below with reference to Fig. 3.

The two front rotors 125a and 125b collect respective swaths 129a and 129b and place them on the outside of the driving wheels 106 so that the rotary rake 124 can unimpededly drive with its driving wheels 106 between these two swaths 129a, 129b.

In addition to the as yet uncollected swath material located between the two front rotors 125a and 125b, the rear rotor 125c also collects the swath 129a from the rotor 125a and places this quantity of swath material in a swath 129c next to the swath 129b from the rotor 125b. Thus, the adjacent swaths 129c and 129b together form the final swath 129d. As opposed to conventional rotary rakes with an even number of rotors, this final swath 129d will in this way have a displaced position relative to the centre axis of the rotary rake 124. Concerning the width of the final swath 129d, this is of no importance in relation to subsequent picking up of the swath material 129d by means of picking up tools and/or vehicles as the width of the final swath 129d does not deviate from the width of ordinary swaths.

The arm 101c of the rear rotor 125c is pivotally movable relative to the running frame 102 about a vertical pivot axis 130. This means that the rear rotor 125c is able to move in a direction 131 substantially transversely to the direction of driving 121 relative to the running frame 102.

This possibility of movement has been provided in order to avoid or at least reduce the quantity of uncollected swath material during curve driving and to ensure a constant width of the final swath 129d.

As is the case for the arms 101a, 101b arranged pairwise about the running frame 102, means (not shown) are also provided for the arm 101c of the rear rotor 125c for maintaining the orientation of the supporting wheels 126 of the rotor 125c so that they always point in the direction of driving 121.

As appears from Fig. 3, mechanical means in the form of a pivot joint with a substantially vertical pivot axis 133 arranged on the hitching device 107, a further pivot joint 134 with a substantially vertical pivot axis arranged on the movable rear arm 101c and a rod 132 extending between and being connected at either end with the respective pivot joints 133 and 134 are provided for controlling the movement of the rear rotor 125c in the transverse direction 131.

During driving straight ahead, the angle between a transverse component of the hitching device 107 and the running frame 102 will be substantially right, as shown in Fig. 3. During curve driving, this angle will change depending on the radius of the curve. This fact is utilised to provide external control of the displacement of the rear rotor 125c in the transverse direction 131.

Thus, the change in the angle between the transverse component of the hitching device 107 and the running frame 102 determines the extent of the transverse displacement of the rotor 125c by means of the mutual location of the pivot axis of the pivot joint 133 relative to the pivot axis 108 together with the mutual location of the pivot axis of the pivot joint 134 relative to the pivot axis 130 at a particular effective arm length of the arm 101c.

When driving in a right curve, the angle between the right part of the transverse component of the hitching device 107 and the running frame 102 is reduced, which makes the rod 132 transfer a pressure to the left side of the arm 101c so that the arm 101c pivots about its pivot joint 130 and displaces the rotor 125c towards the right. At straightening up for driving straight ahead, the rotor 125c is pulled back to its starting position. Obviously, the mechanism acts analogously at left curve driving and subsequent straightening up.

The mutual position and dimensioning of the control means 132, 133, 134 can be adjusted to each other to obtain a suitable relation between the displacement of the rotor 125c and the curve driving radius. This ensures that the quantity of uncollected swath material is kept at a minimum and that the width of the final swath 129d is kept constant during curve driving.

It should be understood that other means can be provided for displacement of the rear rotor 125c in the transverse direction 131 as a result of the change in the angle between the transverse component of the hitching device 107 and the running frame 102, e.g., hydraulic or electric means.

The external control of the rear arm is only active in the working position and is disconnected when the rotary rake is in its transport position.

In Fig. 3, the position of the rear arm 101c has been displaced to the left relative to the centre axis of the rotary rake 124, and the rod 132 consequently extends diagonally from the right side of the hitching device 107 to the left side of the arm 101c. It should be understood that, without any consequence for the mode of action of the rotary rake 124 according to the embodiment, the arm 101c might just as well have been displaced to the right relative to the centre axis of the rotary rake 124, and the rod 132 might correspondingly have extended diagonally from the left side of the hitching device 107 to the right side of the arm 101c. In that case, the direction of rotation would have been opposite to the one shown in Fig. 3.

It should be understood that the invention is not limited to the embodiments shown and/or described here, but that various modifications and combinations can be made without deviating from the scope of protection of the appended claims.

## Claims

1. A rotary rake (24) comprising an elongated running frame (2) designed at one end to be connected to a tractor, at least one arm (1) being fastened to the running frame (2) through a pivot joint so as to be pivotal about a pivot axis (3) so that the arm (1) is able to swing between a lowered working position and a raised transport position, the arm (1) being connected to a rotor (25) with a chassis (5), the arm (1) comprising a number of arm members which are pivotally interconnected through intermediate pivot joints the pivot axes of which are substantially vertical in the working position so that the rotor (25) is movable between an outermost position in which the arm (1) presents a longest effective arm length (A) and an innermost position in which the arm (1) presents a shortest effective arm length (a),
**characterized in that** the arm (1) comprises at least two elongated arm members (11, 13) and at least three of the said intermediate pivot joints, a first elongated arm member (11) being pivotal about a second pivot axis (10) relative to the running frame (2), a second elongated arm member (13) being pivotal relative to the first elongated arm member (11) about a third pivot axis (12), and the chassis (5) of the rotor being pivotal relative to the second elongated arm member (13) about a fourth pivot axis (14).

2. A rotary rake (24) according to claim 1, **characterized in that** the ratio between the shortest effective length (a) of the arm and the longest effective length (A) of the arm is at least 1:2.5.

3. A rotary rake (24) according to any one of the preceding claims, **characterized in that** the two elongated arm members (11, 13) are adapted to pivot oppositely to each other at switching between the innermost and the outermost positions.

4. A rotary rake (24) according to claim 3, **characterized in that** the elongated arm members (11, 13) are interconnected by means of a hinge.

5. A rotary rake (24) according to any one of claims 3 or 4, **characterized in that** the pivot axis (12) or axes of the pivot joint or joints interconnecting the elongated arm members (11, 13) move(s) rearwards relative to the direction of driving (21) at movement of the rotor (25) from a position in which the arm (1) exhibits a long effective arm length to a position in which the arm (1) exhibits a short effective arm length.

6. A rotary rake (24) according to any one of claims 3 to 5, **characterized in that** at least one actuator (16) is provided for pivoting the innermost elongated arm member (11) relative to the running frame (2), and at least one actuator (17) is provided for pivoting the outermost elongated arm member (13) relative to the innermost elongated arm member (11).

7. A rotary rake (24) according to claim 6, **characterized in that** a resilient member has been inserted in the connection between at least one of the actuators (16, 17) and the arm member (11, 13) with which the actuator (16, 17) is connected.

8. A rotary rake (124) according to any one of the preceding claims, **characterized in that** the running frame (102) is provided with driving wheels (106), and that at least two rotors (125a, 125b) are provided on respective sides of the running frame (102) in front of the driving wheels (106) relative to the direction of driving (121), the rotors (125a, 125b) being adapted to place a swath (129a, 129b) outside the track width of the driving wheels (106), and that a single rotor (125c) is provided behind the driving wheels (106) relative to the direction of driving (121), the rotor (125c) being adapted to collect swath material (129c).

9. A rotary rake (124) according to claim 8, **characterized in that** the arm (101c) associated with the rear rotor (125c) is pivotal relative to the running frame (102) about a substantially vertical pivot axis (130).

10. A rotary rake (124) according to claim 9, **characterized in that** means (132, 133, 134) are provided for controlling the movement of the rear arm (101c) relative to the running frame (102) so that the rear rotor (125c) is displaced substantially in the same direction (131) as the turn during curve driving.

## Patentansprüche

1. Kreiselschwader (24) mit einem langgestreckten Fahrgestell (2), das an einem Ende zur Verbindung mit einer Zugmaschine ausgebildet ist, wobei mindestens ein Arm (1) an dem Fahrgestell (2) über ein Schwenkgelenk derart festgelegt ist, dass er um eine Schwenkachse (3) schwenkbar ist, so dass der Arm (1) zwischen einer abgesenkten Arbeitsposition und einer angehobenen Transportposition verschwenkt werden kann, wobei der Arm (1) mit einem Kreisel (25) mit einem Fahrwerk (5) verbunden ist und der Arm (1) eine Anzahl von Armelementen aufweist, die durch zwischengeordnete Schwenkgelenke schwenkbar miteinander verbunden sind, deren Schwenkachsen in der Arbeitsposition im Wesentlichen vertikal sind, so dass der Kreisel (25) zwischen einer äußersten Position, in der der Arm (1) eine längste effektive Armlänge (A) bietet, und einer innersten Position, in der der Arm (1) eine kürzeste effektive Armlänge (a) bietet, bewegt werden kann,
**dadurch gekennzeichnet, dass** der Arm (1) mindestens zwei langgestreckte Armelemente (11, 13) und mindestens drei der zwischengeordneten Schwenkgelenke aufweist, wobei ein erstes langgestrecktes Armelement (11) um eine zweite Schwenkachse (10) relativ zu dem Fahrgestell (2) schwenkbar ist, ein zweites langgestrecktes Armelement (13) relativ zu dem ersten langgestreckten Armelement (11) um eine dritte Schwenkachse (12) schwenkbar ist und wobei das Fahrwerk (5) des Kreisels relativ zu dem zweiten langgestreckten Armelement (13) um eine vierte Schwenkachse (14) schwenkbar ist.

2. Kreiselschwader (24) nach Anspruch 1,
**dadurch gekennzeichnet, dass** das Verhältnis zwischen der kürzesten effektiven Länge (a) des Arms und der längsten effektiven Länge (A) des Arms mindestens 1:2,5 beträgt.

3. Kreiselschwader (24) nach einem der vorausgehenden Ansprüche,
**dadurch gekennzeichnet, dass** die beiden langgestreckten Armelemente (11, 13) beim Umschalten zwischen der innersten und der äußersten Position in entgegengesetzten Richtungen zueinander schwenkbar sind.

4. Kreiselschwader (24) nach Anspruch 3,
**dadurch gekennzeichnet, dass** die langgestreckten Armelemente (11, 13) mittels eines Gelenks miteinander verbunden sind.

5. Kreiselschwader (24) nach einem der Ansprüche 3 oder 4,
**dadurch gekennzeichnet, dass** bei Bewegung des Kreisels (25) von einer Position, in der der Arm (1) eine lange effektive Armlänge zeigt, in eine Position, in der der Arm (1) eine kurze effektive Armlänge zeigt, die Schwenkachse (12) oder Schwenkachsen des oder der Schwenkgelenke, die die langgestreckten Armelemente (11, 13) miteinander verbinden, sich relativ zu der Fahrtrichtung (21) nach hinten bewegt bzw. bewegen.

6. Kreiselschwader (24) nach einem der Ansprüche 3 bis 5,
**dadurch gekennzeichnet, dass** mindestens eine Betätigungseinrichtung (16) zum Verschwenken des innersten langgestreckten Armelements (11) relativ zu dem Fahrgestell (2) vorgesehen ist und mindestens eine Betätigungseinrichtung (17) zum Verschwenken des äußersten langgestreckten Armelements (13) relativ zu dem innersten langgestreckten Armelement (11) vorgesehen ist.

7. Kreiselschwader (24) nach Anspruch 6,
**dadurch gekennzeichnet, dass** ein federnd nachgiebiges Element in die Verbindung zwischen mindestens einer der Betätigungseinrichtungen (16, 17) und dem Armelement (11, 13) eingefügt ist, mit dem die Betätigungseinrichtung (16, 17) verbunden ist.

8. Kreiselschwader (124) nach einem der vorausgehenden Ansprüche,
**dadurch gekennzeichnet, dass** das Fahrgestell (102) mit Laufrädern (106) versehen ist und dass mindestens zwei Kreisel (125a, 125b) auf jeweiligen Seiten von dem Fahrgestell (102) relativ zu der Fahrtrichtung (121) vor den Laufrädern (106) vorgesehen sind, wobei die Kreisel (125a, 125b) dazu ausgebildet sind, einen Schwad (129a, 129b) außerhalb von der Spurbreite der Laufräder (106) abzulegen, und dass ein einziger Kreisel (125c) relativ zu der Fahrtrichtung (121) hinter den Laufrädern (106) vorgesehen ist, wobei der Kreisel (125c) zum Sammeln von Schwadmaterial (129c) ausgebildet ist.

9. Kreiselschwader (124) nach Anspruch 8,
**dadurch gekennzeichnet, dass** der dem hinteren Kreisel (125c) zugeordnete Arm (101c) relativ zu dem Fahrgestell (102) um eine im Wesentlichen vertikale Schwenkachse (130) schwenkbar ist.

10. Kreiselschwader (124) nach Anspruch 9,
**dadurch gekennzeichnet, dass** Einrichtungen (132, 133, 134) vorgesehen sind zum derartigen Steuern der Bewegung des hinteren Arms (101c) relativ zu dem Fahrgestell (102), dass der hintere Kreisel (125c) während einer Kurvenfahrt im Wesentlichen in der gleichen Richtung wie die Kurve verlagert wird.

## Revendications

1. Râteau rotatif (24) comprenant un cadre allongé de roulement (2) conçu pour être relié à un tracteur par l'une des extrémités, au moins un bras (1) étant fixé audit cadre de roulement (2) par l'intermédiaire d'une liaison pivotante pour pouvoir pivoter, autour d'un axe de pivotement (3), de telle sorte que ledit bras (1) soit apte à osciller entre une position abaissée de travail et une position relevée de transport, ledit bras (1) étant relié à un rotor (25) pourvu d'un châssis (5), ledit bras (1) comprenant un certain nombre d'éléments qui sont reliés mutuellement, avec faculté de pivotement, par des liaisons pivotantes intermédiaires dont les axes de pivotement sont substantiellement verticaux dans la position de travail, de sorte que ledit rotor (25) est mobile entre une position extérieure extrême dans laquelle le bras (1) présente une longueur opérante maximale (A), et une position intérieure extrême dans laquelle ledit bras (1) présente une longueur opérante minimale (a),
**caractérisé par le fait que** le bras (1) compte au moins deux éléments allongés (11, 13) et au moins trois, parmi les liaisons pivotantes intermédiaires précitées, un premier élément allongé (11) dudit bras pouvant pivoter vis-à-vis du cadre de roulement (2) autour d'un deuxième axe de pivotement (10), un second élément allongé (13) dudit bras pouvant pivoter vis-à-vis dudit premier élément allongé (11) dudit bras, autour d'un troisième axe de pivotement (12), et le châssis (5) du rotor pouvant pivoter vis-à-vis dudit second élément allongé (13) dudit bras, autour d'un quatrième axe de pivotement (14).

2. Râteau rotatif (24) selon la revendication 1, **caractérisé par le fait que** le rapport, entre la longueur opérante minimale (a) du bras et la longueur opérante maximale (A) dudit bras, est d'au moins 1 : 2,5.

3. Râteau rotatif (24) selon l'une quelconque des revendications précédentes, **caractérisé par le fait que** les deux éléments allongés (11, 13) du bras sont conçus pour pivoter, en sens inverse l'un de l'autre, lors d'une commutation entre les positions intérieure extrême et extérieure extrême.

4. Râteau rotatif (24) selon la revendication 3, **caractérisé par le fait que** les éléments allongés (11, 13) du bras sont reliés mutuellement au moyen d'une charnière.

5. Râteau rotatif (24) selon l'une quelconque des revendications 3 ou 4, **caractérisé par le fait que** l'axe de pivotement (12), ou les axes de la ou des liaison(s) pivotante(s) reliant mutuellement les éléments allongés (11, 13) du bras, se meu(ven)t vers l'arrière, par rapport à la direction de l'entraînement (21), lors d'un mouvement du rotor (25) depuis une position dans laquelle le bras (1) présente une grande longueur opérante, jusqu'à une position dans laquelle ledit bras (1) présente une faible longueur opérante.

6. Râteau rotatif (24) selon l'une quelconque des revendications 3 à 5, **caractérisé par le fait qu'**au moins un élément d'actionnement (16) est prévu pour faire pivoter, vis-à-vis du cadre de roulement (2), l'élément allongé (11) du bras qui est situé le plus à l'intérieur, et au moins un élément d'actionnement (17) est prévu pour faire pivoter, vis-à-vis dudit élément allongé (11) du bras situé le plus à l'intérieur, l'élément allongé (13) dudit bras qui est situé le plus à l'extérieur.

7. Râteau rotatif (24) selon la revendication 6, **caractérisé par le fait qu'**une pièce élastique a été intégrée dans la liaison entre au moins l'un des éléments d'actionnement (16, 17), et l'élément (11, 13) du bras auquel ledit élément d'actionnement (16, 17) est relié.

8. Râteau rotatif (124) selon l'une quelconque des revendications précédentes, **caractérisé par le fait que** le cadre de roulement (102) est équipé de roues d'entraînement (106) ; **par le fait qu'**au moins deux rotors (125a, 125b) sont prévus sur des côtés respectifs dudit cadre de roulement (102), devant lesdites roues d'entraînement (106) par rapport à la direction de l'entraînement (121), lesdits rotors (125a, 125b) étant conçus pour placer un andain (129a, 129b) à l'extérieur de la voie desdites roues d'entraînement (106) ; et **par le fait qu'**un unique rotor (125c) est prévu derrière lesdites roues d'entraînement (106) par rapport à ladite direction de l'entraînement (121), ledit rotor (125c) étant conçu pour collecter de la substance d'andainage (129c).

9. Râteau rotatif (124) selon la revendication 8, **caractérisé par le fait que** le bras (101e) associé au rotor postérieur (125c) peut pivoter, vis-à-vis du cadre de roulement (102), autour d'un axe de pivotement (130) substantiellement vertical.

10. Râteau rotatif (124) selon la revendication 9, **caractérisé par le fait que** des moyens (132, 133, 134) sont prévus pour commander le mouvement du bras postérieur (101e), vis-à-vis du cadre de roulement (102), de façon telle que le rotor postérieur (125c) soit substantiellement déplacé dans la même direction (131) que le virage, lors d'un entraînement en ligne courbe.
